# EUROPEAN PATENT SPECIFICATION

(11) **EP 2 670 187 B1**
(45) Date of publication and mention of the grant of the patent: **06.06.2018**
(21) Application number: 12170603.0
(22) Date of filing: 01.06.2012
(51) Int. Cl.: H04W 24/10

(54) **Measurement behaviour indications for resource patterns**
Messverhaltensangaben für Ressourcenmuster
Indications de comportement de mesure pour les modèles de ressources

(43) Date of publication of application: 04.12.2013
(73) Proprietor: FUJITSU LIMITED, Kawasaki-shi, Kanagawa 211-8588 (JP)
(72) Inventor: Webb, Matthew, Hayes, Middlesex UB4 8FE (GB); Moulsley, Timothy, Caterham, Surrey CXR3 5EE (GB); Bucknell, Paul, Brighton, Sussex BN2 1SP (GB)
(74) Representative: Stebbing, Timothy Charles

(56) References cited:
- WO-A1-2011/100672
- US-A1- 2011 170 435
- NEW POSTCOM: "Design of PDSCH muting for CSI-RS in LTE-Advanced", 3GPP DRAFT; R1-105223_DESIGN OF PDSCH MUTING FOR CSI-RS IN LTE-ADVANCED_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 4 October 2010 (2010-10-04), XP050450328, [retrieved on 2010-10-04]
- CATT: "Considerations on Reference Signal for Interference Measurement", 3GPP DRAFT; R1-112959, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538165, [retrieved on 2011-10-04]
- "3rd Generation Partnership Project; Technical Specification Group Radio Access Network; Evolved Universal Terrestrial Radio Access (E-UTRA); Physical layer procedures (Release 10)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V10.5.0, 7 March 2012 (2012-03-07), pages 1-125, XP050579996, [retrieved on 2012-03-07]
- "3rd Generation Partnership Project; Technical Specification Group Radio Access Network; Coordinated multi-point operation for LTE physical layer aspects (Release 11)", 3GPP STANDARD; 3GPP TR 36.819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 15 December 2011 (2011-12-15), pages 1-69, XP050555015, [retrieved on 2011-12-15]

## Description

### Field of the Invention

The present invention relates to wireless communication systems, for example systems based on the 3GPP Long Term Evolution (LTE) and 3GPP LTE-A groups of standards. The invention is particularly suitable for application in mobile communications systems which allow coordinated downlink transmission from more than one transmission point to a given mobile terminal.

### Background of the Invention

Wireless communication systems are widely known in which base stations (BSs) communicate with user equipments (UEs) (also called subscriber or mobile stations) within range of the BSs.

A base station typically has multiple antennas and consequently can transmit (or receive) multiple streams of data simultaneously. Physical antennas controlled by the same base station may be widely geographically separated, but need not be so.

LTE employs the concept of "antenna ports", an antenna port being defined as a group of physical antennas which provides a logically distinct communication path identifiable by its reference signal. Antenna ports may comprise any number of physical antennas. A base station may provide a "cell" consisting of a number of antenna ports.

Related to the antenna port but distinct from it, is the concept of a "transmission point" (TP). Antenna ports cannot necessarily be identified with a particular geographical location, since they can in principle be formed from any number of physical antennas which could be located anywhere. A transmission point is formed by a set of geographically co-located (physical) transmit antennas, and may be associated with one or more antenna ports. A "cell" will typically comprise one TP, but may be formed by more than one TP.

### Frame Structure and Resource Blocks

In a wireless communication system such as LTE, data for transmission on the downlink is organised in OFDMA frames each divided into a number of sub-frames. Various frame types are possible and differ between FDD and TDD for example. Frames follow successively one immediately after the other, and each is given a system frame number (SFN).

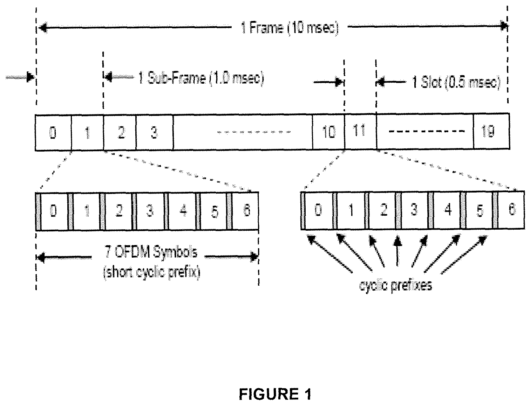

Figure 1 shows a generic frame structure for LTE, applicable to the downlink, in which the 10 ms frame is divided into 20 equally sized slots of 0.5 ms. A sub-frame SF consists of two consecutive slots, so one radio frame contains 10 sub-frames.

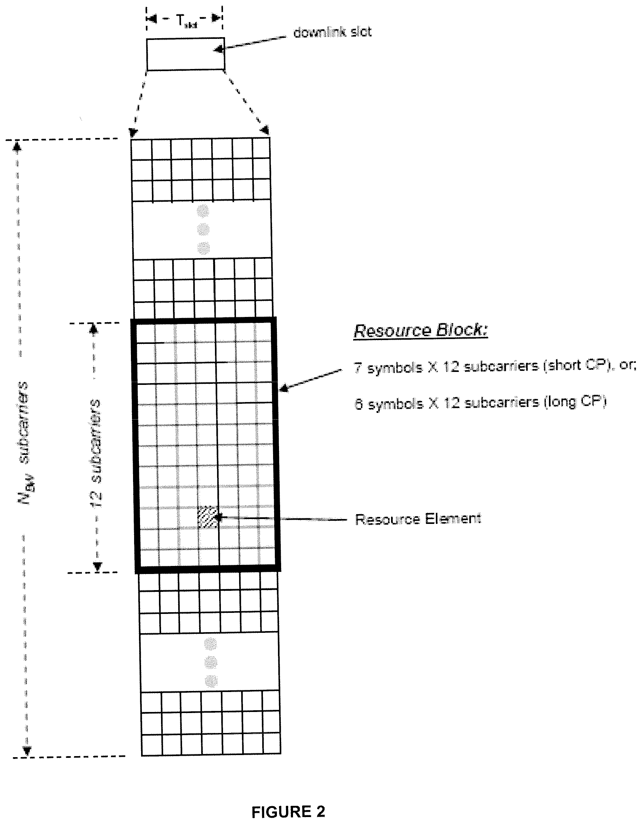

Figure 2 shows a so-called downlink resource grid for the duration of one downlink slot. One downlink slot consists of Nsymb OFDM symbols in general. To each symbol, a cyclic prefix (CP) is appended as a guard time, as shown in Figure 1. Nsymb depends on the cyclic prefix length. The generic frame structure with normal (short) cyclic prefix length contains Nsymb = 7 symbols as illustrated in Figure 2. Additionally, an extended (long) CP is defined, among other reasons to cover large cell scenarios with higher delay spread. Each element in the resource grid is called a resource element (RE) and each resource element corresponds to one symbol. As shown in Figure 2, a set of REs (84 in the case of a normal CP) form a resource block (RB).

### Channels

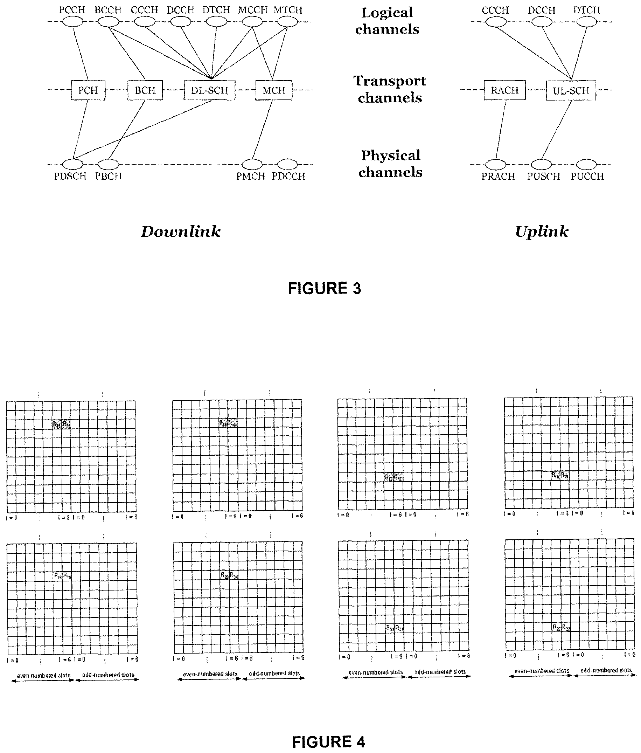

Several channels for data and control signalling are defined at various levels of abstraction within the network. Figure 3 shows some of the channels defined in LTE at each of a logical level, transport layer level and physical layer level, and the mappings between them. For present purposes, the channels at the physical layer level are of most interest.

On the downlink, user data is carried on the Physical Downlink Shared Channel (PDSCH). There are various control channels on the downlink, which carry signalling for various purposes including so-called Radio Resource Control (RRC). In particular the Physical Downlink Control Channel (PDCCH), Physical Broadcast Channel (PBCH) and Physical Multicast Channel (PMCH) are provided. PDCCH is used to carry scheduling information - called downlink control information, DCI - from base stations (called eNBs in LTE) to individual UEs.

Meanwhile, on the uplink, user data and also some signalling data is carried on the Physical Uplink Shared Channel (PUSCH), and control channels include a Physical Uplink Control Channel, PUCCH, used to carry signalling from UEs including channel quality indication (CQI) reports, precoding matrix information (PMI), a rank indication (RI) for MIMO (see below), and scheduling requests.

In the simplest case, a UE communicates with a single serving cell so that there is only one of each of the above channels to be considered. However, more complex scenarios considered below allow a UE to communicate with multiple cells or transmission points, each having its own set of channels. These more complex scenarios may still define a "serving cell" having a co-ordinating role.

The above "channels" defined for various data and signalling purposes, should not be confused with the "channel" in the sense of the radio link between a UE and its serving base station(s), which is subject to fading and interference.

### Reference Signals

To facilitate measurements of the radio link properties by UEs, and reception of some transmission channels, cell-specific reference signals (CRS) are embedded in the downlink sub-frame as transmitted from each antenna of an eNB, or more accurately for LTE/LTE A, from each "antenna port" as defined above.

In case of two transmit antenna ports in LTE, therefore, the CRS are transmitted from each antenna port. The CRS on the second antenna are offset in the frequency domain by three sub-carriers, and to allow the UEs to accurately measure the radio link properties, nothing is transmitted on the other antenna at the same time-frequency location of reference signals.

The CRS provide an amplitude and/or phase reference for allowing the UEs to correctly decode the remainder of the downlink transmission. Other reference signals in LTE include a user equipment-specific reference signal (UE-specific RS) also referred to as a demodulation reference signal, DM-RS.

The CRS are transmitted to all the UEs within a cell and span the entire downlink cell bandwidth. The reference signal sequence depends on, or implicitly carries, the cell identity or "cell ID". As a cell may be served by an eNB having more than one antenna port, respective CRS are provided for up to four antenna ports and the locations of CRS depend on the antenna port.

CRS can be accessed by all the UEs within the cell covered by the eNB regardless of the specific time/frequency resource allocated to the UEs. They are used by UEs to perform so-called Radio Resource Management (RRM) measurements for the purpose of, for example, deriving Reference Signal Received Power (RSRP), used for example for handover of the UE to another cell.

The UE-specific RS or DM-RS is used by the UE to decode PDSCH, and only occurs when PDSCH does; consequently it is not suitable for channel state estimation and feedback.

LTE is the subject of a series of specification releases, with Release 11 (Rel-11) being currently finalised. Starting with Release 10 of the specifications, LTE is referred to as LTE-Advanced (LTE-A). A new reference signal in LTE-A is a Channel State Information Reference Signal (CSI-RS) having particular application to beamforming and MIMO transmission techniques outlined below. The CSI-RS are used for channel estimation and feeding back a so-called Channel Quality Indicator (CQI); it should be noted that this is "measurement" in a different sense from that conventionally applied to CRS. To minimise interference, in the Release 10 specifications, configurations of CSI-RS patterns are defined for 1, 2, 4 or 8 antenna ports and which have a much lower density in time and frequency than the Common Reference Symbols (CRS), and a hence much lower overhead. For example CSI-RS is only transmitted once every several subframes (according to TS 36.211, with periodicity 5, 10, 20, 40 or 80ms, corresponding to between 5 and 80 subframes).

Their purpose is to allow improved estimation of the channel for more than one cell for feeding back channel quality information and possibly other related parameters to the network (compared with using CRS). Unlike CRS, whose frequency location depends only the cell ID, CSI-RS patterns in time and frequency can be configured by higher layers to allow considerable flexibility over which resource elements (REs) contain them.

CSI-RS can occupy REs that otherwise would be occupied by PDSCH; One example of a proposed mapping (pattern) of CSI-RS, for each of 2, 4 and 8 antenna ports, is shown in Figure 4. This example is taken from 3GPP TS36.211 "Evolved Universal Terrestrial Radio Access (E-UTRA); Physical channels and modulation". The eNB may schedule PDSCH around these REs and signal this to the UE, a process called "rate-matching". Rate matching allows the network to tell the UE exactly where it should avoid trying to decode PDSCFH. If PDSCH is not scheduled around these REs, or if the UE is not informed that it has been, then the UE will decode PDSCH on the assumption that it is present in the REs which actually contain CSI-RS, and PDSCH is thus said to be "punctured" by CSI-RS. This may degrade decoding performance.

CSI-RS are thus LTE-A's solution to channel estimation and feedback for high-rate PDSCH scenarios. Further details are given in the above-mentioned 3GPP TS36.211. For present purposes it is notable that a CSI-RS pattern can be defined as a combination of the following from TS 36.211:-
- Number of CSI reference signals configured (i.e. number of antenna ports)
- CSI reference signal configuration
- CSI reference signal subframe configuration
- reference-signal sequence (mainly determined by the Cell ID)

To explain the above items in more detail, "reference signal configuration" is the resource element (RE) pattern within a subframe. The "reference signal subframe configuration" defines which subframes the CSI-RS will occur in, i.e. which subframes the reference signal configuration is actually contained in. The "reference signal sequence" is used to generate the contents of the transmitted symbols in the REs containing the reference signal, in other words a kind of scrambling sequence.

CSI-RS patterns in time and frequency can be configured by higher layers to allow considerable flexibility over which resource elements (REs) they occupy.

To support future Coordinated Multipoint, CoMP operation (see below), a UE compliant with LTE Release 10 can be configured with multiple CSI-RS patterns specific to its serving cell:
- zero or one configuration for which the UE shall assume non-zero transmission power for the CSI-RS; and
- zero or more configurations for which the UE shall assume zero transmission power.

Both non-zero power CSI-RS (NZP CSI-RS) and zero-power CSI-RS (ZP CSI-RS) can be configured in the same cell, in either the same or separate subframes depending on the subframe configuration.

It is expected that in LTE Rel-11, more than one NZP CSI-RS pattern (each one typically corresponding to the antenna ports associated with a TP) can be used by one UE at the same time. For example, this would allow the UE to measure channels from multiple cells (and multiple TPs) and report the results of such measurements to the eNB in the form of CSI reports. By contrast, Rel-10 only permits one NZP pattern to be used at a time by one UE, although in principle multiple patterns could be transmitted by the eNB.

The purpose of the 'zero power CSI-RS patterns' is to ensure that a cell so-configured can safely be assumed by the UE to not transmit in the REs which will contain CSI-RS of the cells it is cooperating with in a CoMP scenario. Although CoMP is not directly supported by the LTE Release 10 specifications, knowledge of the presence of zero power CSI-RS patterns can be used by a Release 10 UE to mitigate their possible impact on data transmissions using PDSCH. That is, knowing which REs are reserved for the ZP patterns allows the UE to avoid the puncturing problem mentioned earlier.

The subframe periodicity and offset with which the patterns occur is termed the subframe configuration, and the non-zero power (NZP) and zero-power (ZP) CSI-RS have independent subframe configurations, both signalled to the UE.

### MIMO and CoMP

A technique called MIMO, where MIMO stands for multiple-input multiple-output, has been adopted in LTE due to its spectral efficiency gain, spatial diversity gain and antenna gain. MIMO schemes employ multiple antennas at the transmitter and/or at the receiver to enhance the data capacity achievable between the transmitter and the receiver. By way of example, in a basic 2x2 MIMO configuration there are two antennas at the transmitter and two antennas at the receiver. Likewise, a basic 4x4 MIMO configuration contains four antennas at the transmitter and four antennas at the receiver. There is no need for the transmitter and receiver to employ the same number of antennas. Typically, a base station in a wireless communication system will be equipped with more antennas in comparison with a UE (which may often be, for example, a mobile handset), owing to differences in power, cost and size limitations. The concept of "antenna ports" as already mentioned is used to manage the base station antennas. Various transmission modes are possible via the antenna ports, including (in LTE-A) a "transmission mode 9" for closed-loop MIMO.

Related to the above, it is possible to coordinate the MIMO transmissions among multiple antenna ports belonging to the same base station (i.e. coordinating transmissions within a single cell) or among multiple base stations (i.e. coordinating transmissions in adjacent or nearby cells) to reduce inter-cell interference and improve the data rate to a given UE. This is called coordinated multi-point transmission/reception or CoMP, and forms a part of Rel-11 of LTE. Downlink schemes used in CoMP include "Coordinated Scheduling and/or Coordinated Beamforming (CS/CB)" and "Joint Processing/Joint Transmission (JP/JT)". An additional technique which may be employed is aggregation of multiple carriers (CA) to increase the available peak data rate and allow more complete utilisation of available spectrum allocations.

CoMP schemes employ the concept of the transmission point (TP) mentioned above, which has at least one physical antenna. Any number of TPs may coordinate in a CoMP scenario, either to form antenna ports or to form cells. An eNB may control any number of TPs, and eNBs may exchange certain information over the X2 interface defined in LTE. LTE uses the terminology "CoMP cooperating set" to refer to the set of TPs directly and/or indirectly participating in data transmission to a UE in a time-frequency resource. Such a set may or may not be transparent to the UE. Further details are given in 3GPP TR 36.819 v2.0.0 on Coordinated Multi-Point Operation for LTE. In CS/CB, data to a single UE is transmitted from one transmission point, but decisions regarding user scheduling (i.e. the scheduling of timings for transmissions to respective UEs) and/or beamforming decisions are made with coordination among the cooperating cells (or transmission points). In other words, scheduling/beamforming decisions are made with coordination between the cells/TPs participating in the coordinated scheme so as to prevent, as far as possible, a single UE from receiving signals from more than one transmission point. One form of CS/CB is called Dynamic Point Scheduling (DPS) to denote that data for the UE is available at several TPs but is only sent from one TP at any one time.

On the other hand, in JP/JT, data to a single UE is simultaneously transmitted from multiple transmission points to (coherently or non-coherently) improve the received signal quality and/or cancel interference for other UEs. In other words the UE actively communicates in multiple cells and with more than one transmission point at the same time. From the viewpoint of the UE, it makes no difference whether the cells belong to different eNBs or to the same eNB.

In CA, discrete frequency bands are used at the same time (in other words, aggregated) to serve the same user equipment, allowing services with high bandwidth demands (up to 100MHz) to be provided. CA is a feature of LTE-A which allows LTE-A-capable terminals to access several frequency bands simultaneously whilst retaining compatibility with the existing LTE terminals and physical layer. CA may be considered as an complement to JP for achieving coordination among multiple cells, the difference being (loosely speaking) that CA requires coordination in the frequency domain and JP in the spatial domain.

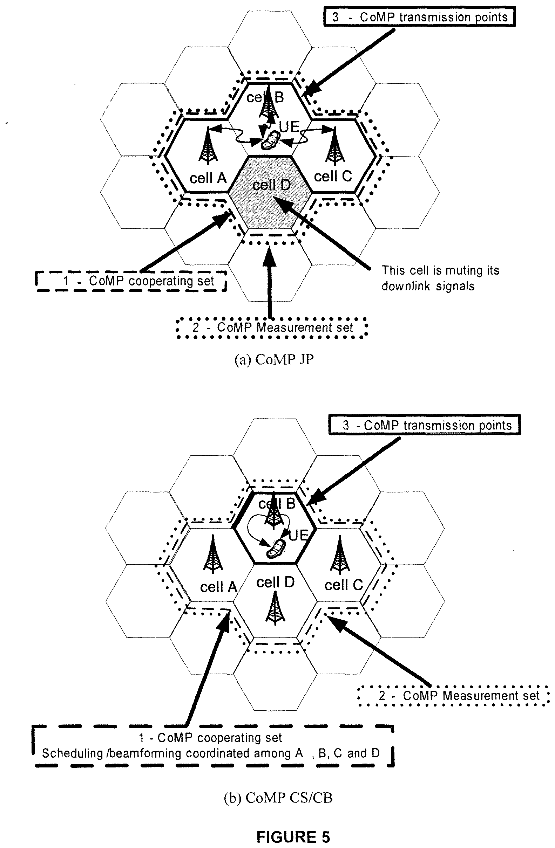

Figures 5(a) and (b) schematically illustrates the working principles of the two above-mentioned categories of downlink transmission used in CoMP, although it should be noted that the Figure may not reflect the true distribution of base stations vis-à-vis cells in a practical wireless communication system. In particular, in a practical wireless communication system, the cells extend further than the hexagons shown in the Figure so as to overlap to some extent, allowing a UE to be within range of more than one base station at the same time. Furthermore, it is possible, in LTE for example, for the same base station (eNB) to provide multiple overlapping cells, normally using distinct carrier frequencies. Nevertheless, Figure 5 is sufficient for present purposes to illustrate the principles of CS/CB and JP downlink transmission schemes respectively, used in CoMP.

Joint Processing (JP) is represented in Figure 5(a) in which cells A, B and C actively transmit to the UE, while cell D is not transmitting during the transmission interval used by cells A, B and C.

Of less relevance to the present invention, coordinated scheduling and/or coordinated beamforming (CS/CB) is represented in Figure 5(b) where only cell B actively transmits data to the UE, while the user scheduling/beamforming decisions are made with coordination among cells A, B, C and D so that the co-channel inter-cell interference among the cooperating cells can be reduced or eliminated.

In MIMO/CoMP scenarios, the UE will be expected to provide feedback to the network regarding how its transmissions should be formed in terms of, e.g., number of spatial layers, i.e. rank (RI), precoding (PMI) and modulation and coding scheme (CQI). In the case of a CoMP-enabled network, this feedback information could be derived as a function of some, or all, of the channels between the multiple transmission points in the cooperating group of cells and the UE, as compared to the simple case of having only one transmission point and one associated channel to the UE.

Advanced CoMP schemes may also perform better if some more explicit information regarding the radio channel is available. In particular, CoMP performance may be improved by using measurements not only of the channels within the cooperating group, but by also providing to the network some feedback regarding interference being received from outside the cooperating group - here termed 'out-of-group interference' (OGI). OGI may arise from other antennas in the same network and/or from antennas associated with other networks.

### CSI-RS in CoMP

Thus, in the operation of CoMP, UEs feed back channel state information. The channel state information is often detailed, and often includes measurements of one or more of channel state/statistical information, narrow band Signal to Interference plus Noise Ratio (SINR), etc. The channel state information may also include measurements relating to channel spatial structure and other channel-related parameters including the UE's preferred transmission rank and precoding matrix.

In Rel-11, 3GPP is likely to approve changes to the specification of the above mentioned CSI-RS to improve support of likely CoMP scenarios. There are already agreements allowing more than one CSI-RS pattern to be configured for a UE.

In this way a UE may receive several independent NZP CSI-RS from its serving cell, each having a different number of antenna ports and power levels relative to PDSCH. CSI-RS may also be made UE-specific by initialising the scrambling sequence producing the reference signal with a UE-specific signalled quantity. Making the UE-signalled quantity common to multiple UEs will allow the multiple UEs to potentially share the same CSI-RS within a cell; however, the scrambling to be used will be signalled to each UE independently. Thus, different UEs can receive partially overlapping NZP CSI-RS patterns without increasing the number of REs occupied by CSI-RS.

Here, the power level relative to PDSCH is signalled (in Rel-10) by a ratio between the power of NZP-CSI-RS and that of PDSCH, which allows the UE to estimate the data rate which would be achievable with PDSCH transmission and include this information in a CSI report. In Rel-11, it is envisaged that CSI reports could be provided for each CSI-RS pattern, assuming a single PDSCH is transmitted from a single TP, and with a particular hypotheseis about the transmission scheme and interference. CSI reports could also be provided corresponding to a joint transmission hypothesis (e.g. joint transmission from two or more TPs). Multiple CSI reports could be provided for the same TP(s), each corresponding to a different transmission/interference hypothesis, these hypotheses being based on UE assumptions about the transmission power from each TP. It is likely that the UE would be informed (or could derive) the powerr ratio between the CSI-RS for a given TP and the corresponding PDSCH (or part of a joint PDSCH) and similarly derive the total power of a joint PDSCH to be assumed from a given set of TPs.

### Measurement Reports

In order for a UE to indicate to the network information regarding the suitability of a TP for CoMP transmission to the UE, the UE needs to make some measurements of the signals it can receive from the TP. In Rel-10, measurements mainly intended for mobility management are defined in terms of measurement configurations. A measurement configuration informs a UE of such things as the carrier frequency, cell identities and timing information for which measurements should be reported. A configuration also includes criteria defining when a measurement should be reported. Such criteria can be either periodic or event-triggered.

In the event-triggered cases, the measurement may be triggered only when a defined event occurs (aperiodic event-triggered) or it may be triggered on a periodic basis once an event occurs (periodic event-triggered). Trigger events are defined in 3GPP TS 36.331, Evolved Universal Terrestrial Radio Access (E-UTRA); Radio Resource Control (RRC); Protocol specification. Other parameters of an event-triggered measurement are also configured, including the duration of a periodic event-triggered measurement, and a delay between an event triggering and the measurement(s) beginning.

In Rel-10, the measurements are conducted on CRS, and are intended mainly for mobility management (RRM), i.e. handover management as already mentioned. Although a Rel-10 UE may make CSI-RS measurement reports, these are only for allowing the eNB to schedule PDSCH transmissions from the serving cell (assuming a single TP).

LTE Release11 extends the use of CSI-RS for measurements to support CoMP, allowing measurements from multiple TPs in other cells cooperating with the serving cell, and/or multiple TPs within the serving cell. That is, in Rel-11, a UE will need to gather additional information about the TPs it can receive so that it can judge whether to inform the network that they are suitable for CoMP transmission to the UE. However, it is currently assumed that additional measurements suitable for the formation of a CoMP group will be on the basis of CSI-RS (instead of CRS), and there is consequently a need to define new measurement procedures and associated RRC signalling for the purpose. It would also be advantageous to define new measurement events in the vein of Rel-10 but designed specifically to support CoMP group formation.

In view of the above, it is desirable to improve the performance of networks in which there is coordinated downlink transmission, for example from more than one co-operating cell or from a single cell with more than one antenna, and in particular to enhance the flexibility of terminal behaviour in response to downlink signals in such networks, including but not restricted to CSI-RS in LTE.

### Summary of the Invention

According to aspects of embodiments of the present invention, there are provided a method of managing measurement reports in a wireless communications system, a wireless communication system, a base station and a terminal, all as defined in the claims. The claims define the scope of the invention. In the method, "no measurement" is also to be regarded as a type of measurement. In other words the terminal may be expected to ignore (make no report with respect to) certain signals if, for example, they are intended for use of other terminals.

The "behaviour" referred to above can be viewed as the intended purpose of the signals, although this can be modified or overridden in some cases as explained below.

The above method is preferably applied to a frame-based wireless communication system in which each frame is divided into subframes, and wherein the set or sets of time and frequency locations comprise:
a set of resource elements occupied by the signal, and
a subframe configuration indicating in which of one or more subframes the occupied resource elements occur.

Thus, the configuration is comprised of both a resource element configuration, for specifying the specific REs reserved for the signals within a given subframe, and a subframe configuration specifying the subframes in which the signal actually occurs.

The configuration referred to above preferably further comprises a sequence (such as a scrambling sequence) needed to decode the signal. This allows a specific terminal (or group of terminals) to decode a signal contained in the resource pattern whilst other terminals may ignore it.

Embodiments of the present invention have particular, but not exclusive, application to co-ordinated multipoint transmission, CoMP. Thus, the base station preferably controls a plurality of transmission points forming one or more groups for coordinated multipoint, CoMP, each transmission point being a member of at least one of the CoMP groups, the terminal being served by one of the groups.

As outlined earlier, in LTE Release 11, the channel state information reference signal, CSI-RS is a reference signal used for CoMP. Thus, the wireless communication system may be based on LTE and in this instance the signals may be CSI-RS transmitted from each of one or more transmission points in the form of non-zero power, NZP, CSI-RS and/or zero-power, ZP, CSI-RS.

In this instance, the configuration may further identify or imply the signal to be an NZP and/or ZP CSI-RS. Then, the behaviour of the terminal with respect to the signal may include any of:
using a NZP CSI-RS to measure the channel from the transmission point for CQI purposes when the transmission point is participating in CoMP transmission to the terminal;
using a NZP CSI-RS to estimate interference from the transmission point for CQI purposes when the transmission point is not participating in CoMP transmission to the terminal;
ignoring a NZP CSI-RS intended for other terminals;
using a ZP CSI-RS to measure interference from other transmission points outside the group serving the terminal;
ignoring a ZP CSI-RS intended for other terminals; and
using a NZP CSI-RS to measure a quantity used in radio resource management.

It will be noted that it is possible for more than one behaviour to be associated with the same resource pattern. The association between the resource pattern and the behaviour may be either explicit or implicit. In one embodiment, the behaviour is provided to the terminal further to said resource pattern, for example by way of an enumerated list. The configuration, e.g. the enumerated list can also imply a reporting configuration defining how and when the terminal should provide the one or more types of report.

In another embodiment, sets of resource patterns are defined such that the set, to which a given resource pattern belongs, implies the behaviour associated with the resource pattern or vice-versa. The sets, in other words the classifying or partitioning of resource patterns, may be notified to the terminal during operation, for example as part of system information blocks (SIBs). Alternatively the sets may be defined in the system specifications and therefore known to the terminal in advance (by being set in firmware of the terminal for example).

In any method as defined above, it is possible for the base station to transmit a signal to the terminal for temporarily over-riding the behaviour associated with the resource pattern. This allows the network to obtain alternative or additional reports from a terminal without the need for reconfiguring the terminal and configuring it back again. Such over-riding of behaviour includes both additional measurements augmenting the behaviour already configured, and replacing the configured behaviour temporarily with an alternative behaviour.

Where the behaviour includes making multiple types of measurement on signals in a given resource pattern, the different types of measurement may be given different priorities and the terminal is expected to make and/or report the highest priority measurement/report that applies to a time and frequency location.

In a further embodiment, the configured behaviour may be modified by semi-autonomous actions on the part of the terminal. That is, the terminal is permitted on its own initiative to vary the type(s) of report it makes with respect to the signals in the resource pattern. Thus, for example, a terminal having sufficient capacity may provide additional measurement reports over and above those expected according to the behaviour associated with the resource pattern. On the other hand a terminal may choose not to send a measurement report requested of it (assuming it has permission to do so), perhaps due to processing or battery constraints.

The additional measurement reports here include the possibility of a terminal sending a report with respect to a resource pattern for which it was expected not to send any measurement report (that resource pattern being intended for other terminals instead). In this instance the terminal may indicate to the base station that it has ignored the behaviour expected of it, but need not do so.

In a further embodiment, the terminal sends a request to the base station to be allowed to perform the semi-autonomous actions referred to above.

As already mentioned the sets of time and/or frequency locations may comprise a resource pattern of resource elements occupied by the signal, in other words a RE configuration, and a subframe configuration indicating which one or more subframes the occupied resource elements occur in. In one embodiment there is a set of resource patterns configured in the terminal (either by signalling or predefined) which have the same subframe configuration but differ in their RE configurations. In this case the behaviour may include making RRM -type measurements, in other words measurements of received signal strength or received power, for each of the resource patterns.

In a further embodiment of the present invention, relating to CSI-RS as the signals transmitted from each of one or more transmission points, the terminal is configured with two CSI-RS subframe configurations, each associated with a number of CSI-RS, resource element patterns, and reference signal sequence (scrambling sequence). One subframe configuration is associated only with NZP CSI-RS patterns, and the other is associated only with ZP CSI-RS patterns. Each configuration is configured for one or more of the possible related behaviours.

According to a second aspect of the present invention, there is provided a wireless communication system comprising a base station and a terminal;
the base station arranged to provide the terminal with a configuration which comprises a resource pattern defined by a plurality of different sets of time and frequency locations in which a signal may be transmitted, the resource pattern being associated with a behaviour of the terminal with respect to the signal, the behaviour including:
which one or more of different types of measurement the terminal is expected to make when receiving signals in one or more of the different sets of time and frequency locations; and/or
one or more different types of report the terminal is expected to provide to the said base station on the basis of the measurements; and
the terminal arranged to receive the configuration and responsive thereto, when receiving the signal, to follow said behaviour with respect to the signal.

According to a third aspect of the present invention, there is provided a base station for use in a wireless communication system comprising:
configuration means arranged to provide a terminal of the wireless communication system with a configuration which comprises a resource pattern defined by a plurality of different sets of time and frequency locations in which a signal may be transmitted, the resource pattern being associated with a behaviour of the terminal with respect to the signal, the behaviour including:
which one or more of different types of measurement the terminal is expected to make when receiving signals in one or more of the different sets of time and frequency locations; and/or
one or more different types of report the terminal is expected to provide to the said base station on the basis of the measurements.

According to a fourth aspect of the present invention, there is provided a terminal for use in a wireless communication system comprising:
measurement means arrange to receive a configuration which comprises a resource pattern defined by a plurality of different sets of time and frequency locations, the resource pattern being associated with a behaviour of the terminal with respect to the signal, the behaviour including:
which of one or more different types of measurement the terminal is expected to make when receiving signals in one or more of the different sets of time and frequency locations; and
one or more different types of report the terminal is expected to provide to the said base station on the basis of the measurements.

A further aspect of the present invention provide program code which, when executed by a processor of radio transceiver equipment in a wireless communication system, provide the base station or the terminal as defined above. Such program code may be stored on one or more non-transitory computer-readable media.

Embodiments of this invention create new flexibility in the use of CSI-RS resource patterns so that they can be used for new purposes more efficiently than is currently the case. In a preferred embodiment, the invention proposes to associate to a CSI-RS pattern and subframe configuration a UE measurement behaviour identifier, such as "for measurement of non-zero-power CSI-RS", "not for measurement" or "for RRM measurements on CSI-RS resources" among others. Certain embodiments allow the network to make temporary, UE-specific exceptions to a configuration and for various ways of assigning the measurement behaviours to patterns. Other embodiments allow some semi-autonomous UE decisions as to capability in certain cases.

In the CoMP scenarios envisaged in Rel-11 and onwards of LTE-A, there is the likelihood that a particular transmission point (TP) will be part of several distinct CoMP groups for distinct UEs and will therefore need to provide potentially large numbers of non-zero power CSI-RS patterns, as well as patterns for other purposes such as zero-power patterns and RRM measurement patterns. This invention allows much more flexible use of the currently-defined CSI-RS patterns and ensures they need not puncture PDSCH for the UE. In allowing such flexibility, it can be used to allow the network to manage the measurement load at the UE, and the feedback load on the UL. It further allows in some embodiments for agreement between the network and UE as to what suitable configurations might be.

In general, and unless there is a clear intention to the contrary, features described with respect to one aspect of the invention may be applied equally and in any combination to any other aspect, even if such a combination is not explicitly mentioned or described herein.

As is evident from the foregoing, many embodiments of the present invention involves signal transmissions between cells and user equipments in a wireless communication system. The cells are associated with one or more base stations. The term "base station" has a broad meaning and encompasses, for example, an access point or transmission point. The above "base station" may also be constituted by a plurality of base station equipment such as eNBs communicating via the X2 interface. References to signals being received by "the network" include receipt by a base station, via the transmission points it controls.

References in this specification to "LTE" also include "LTE-A" except as otherwise demanded by the context. The terms "network" and "system" are used interchangeably.

It is envisaged that the base stations will typically take the form proposed for implementation in the 3GPP LTE and 3GPP LTE-A groups of standards, and may therefore be described as an eNodeB (eNB) (which term also embraces Home eNodeB) as appropriate in different situations. However, subject to the functional requirements of the invention, some or all base stations may take any other form suitable for transmitting and receiving signals from terminals.

Similarly, in the present invention, each terminal may take any form suitable for transmitting and receiving signals from base stations. For example, the terminal may take the form of a user equipment (UE), a subscriber station (SS), or a mobile station (MS), or any other suitable fixed-position or movable form. For the purpose of visualising the invention, it may be convenient to imagine the terminal as a mobile handset (and in many instances at least some of the user equipments will comprise mobile handsets), however no limitation whatsoever is to be implied from this. Prior art literature is represented by WO 2011/100672 A1 which shows the provision of CSI-RS to support coordinated multi-point (CoMP) network implementations and heterogeneous networks. In particular an overhead limitation is obtained by requiring a larger periodicity of CSI-RS in those scenarios with high reuse cluster sizes and multi-antenna configurations with a significant number of CSI-RS antenna ports to monitor.

### Brief Description of the Drawings

Reference is made, by way of example only, to the accompanying drawings in which:
Figure 1 illustrates a generic frame structure employed for the downlink in an LTE wireless communication system;
Figure 2 illustrates resource allocation within a frame;
Figure 3 shows relationships between various channels defined in LTE;
Figure 4 shows a proposed pattern of CSI-RS reference signals in LTE;
Figure 5 illustrates principles employed in Co-operative Multipoint Processing (CoMP);
Figure 6 shows a CoMP system with transmission points arranged in groups;
Figure 7 is a flow chart of a general invention embodiment; and
Figure 8 is a table of CSI-RS configurations specified in LTE.

### Detailed Description

The invention is intended for application in mobile communication systems such as LTE which may allow coordinated downlink transmission from more than one cooperating cell (or one cell with more than one antenna) to a given mobile terminal. Typically, the UE will be expected to provide feedback to the network regarding how its transmissions should be formed in terms of, e.g., number of spatial layers, i.e. rank (RI), precoding (PMI) and modulation and coding scheme (CQI). In the case of a coordinated multipoint (CoMP)-enabled network, this feedback information could be derived as a function of some, or all, of the channels between the multiple transmission points in the cooperating group of cells and the UE, as compared to the simple case of having only one transmission point and one associated channel to the UE.

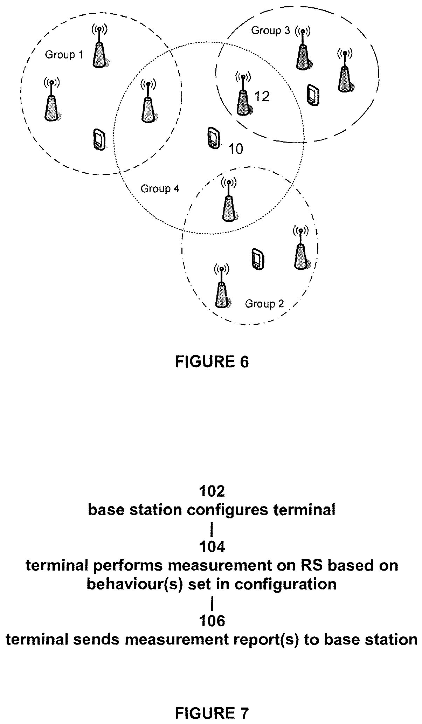

As an example, the provisions described in the introduction do not fully account for a probable scenario in a deployed CoMP system, as illustrated in Figure 6.

Figure 6 shows four groups of TPs labelled Group 1 to Group 4, each forming a CoMP group for the UEs within the boundaries marked by circles. It should be noted that these boundaries do not necessarily correspond to cells. It is possible for each TP within a group to form its own cell, in which case the CoMP transmission occurs among the cells contained by each group.

Considering the UEs served by TPs in Group 4, the transmission points (TPs) forming that group, exemplified by TP 12, will transmit suitably-configured NZP CSI-RS to the UEs within the Group 4 boundary (only a single UE 10 is shown, for simplicity). Each UE also receives its own PDSCH from the TPs within the group (generally, a single PDSCH provided jointly by the TPs).

Since TP 12 is also in Group 3, it will additionally transmit NZP CSI-RS suitable for measurement in Group 3, as will the other constituents of that group. In general, a TP will need to transmit NZP CSI-RS for each CoMP coordinating group it is part of, and may use different resource and subframe configurations for each. Since CSI-RS occupy time/frequency resources which otherwise would be occupied by PDSCH, a UE needs to receive configurations relevant to each such pattern so that it knows its PDSCH can be rate-matched around the various patterns. That is, the UE is typically unaware of how its PDSCH will be transmitted; to decode it the UE requires the CRS or DM-RS, and to know if any REs are reserved by NZP and ZP CSI-RS and therefore not occupied by PDSCH.

However, the network may not want to receive CSI reports for all of the several patterns since this could result in increased UL signalling overhead and increase power consumption and processing effort at the UE. It would not be suitable to configure these resources, namely the reserved CSI-RS locations around which the PDSCH is rate-matched but for which the UE is not required to make CSI reports, as ZP CSI-RS since the UE would then make an assumption of zero transmit power in those resources, which would be clearly incorrect. Additionally, it may be desirable to configure coordinating-group-wide ZP patterns so that the UE can measure interference arising from outside the CoMP coordinating group only.

Further, a 3GPP discussion group has agreed that new RRM-like measurements based on CSI-RS rather than CRS will be needed in Rel-11. These are to allow collection of information suitable for management of the CoMP coordinating group for a UE, and possibly for other purposes. This implies further usage of CSI-RS patterns. Several possible uses for a given CSI-RS pattern can be envisaged in future, for example:
- The pattern from one TP contains NZP CSI-RS for the UE to measure the channel from that TP for CQI purposes (under the assumption that transmission from the TP would be part of a coordinated CoMP transmission to the UE). This would be appropriate for any CoMP scheme.
- The pattern contains NZP CSI-RS for the UE to estimate interference from that TP for CQI purposes (under the assumption that transmission from the TP would be interference, and not part of a coordinated CoMP transmission to the UE). This would be appropriate for the selected TP in DPS (Dynamic Point Selection), where other TPs than the selected one would continue to transmit to other UEs.
- The pattern contains NZP CSI-RS for other UEs, but not for measurement by this UE, thereby reducing the measurement burden on this UE.
- The pattern is ZP CSI-RS for measurement of out-of-group interference by the UE. This would be appropriate for CoMP schemes where in-group interference is suppressed, such as JT (Joint transmission) or DPB (Dynamic Point Blanking) where one point (or possibly more) transmits and the others do not. For this purpose, every TP in the group should have the same ZP CSI-RS configuration.
- The pattern is ZP CSI-RS to allow measurement by other UEs of CSI-RS from coordinating cells, but not for measurement by this UE. The effect of this pattern is that the serving cell will not be transmitting in the configured REs, and informing the UE of this allows rate matching instead of puncturing of PDSCH.
- The pattern contains NZP CSI-RS for RRM-type measurements on CSI-RS by the UE. This would be for managing the set of CSI-RS resources for which the UE reports CSI.

At present, it is not possible to indicate what the purpose (intended UE behaviour) of a CSI-RS configuration is, apart from that it is NZP or ZP, the implications of which are fixed in Rel-10 specifications (and these are two separate 'types' of pattern in any case). In LTE Release 10 the single configurable NZP CSI-RS pattern is for channel measurements for CSI reporting for the serving cell. The one or more ZP CSI-RS patterns are only for informing the UE that the relevant REs are not used for PDSCH transmission. In later Releases of the LTE it is therefore desirable to give the CSI-RS patterns multiple possible meanings so that their various purposes (intended UE behaviours) can be served whilst allowing the UE to assume that PDSCH is either rate-matched around CSI-RS, or punctured.

Embodiments of the present invention allow associating to a configured CSI-RS pattern (pattern of REs) a behaviour or behaviours, such as those listed above. This signals to the UE (i) the resources for which (ii) a particular use, or no use, should be made and (iii) information to enable the UE to determine whether the PDSCH will be rate-matched around those resources, or not. The patterns can be coordinated among the CoMP group as necessary.

In general, different cases can be considered:
- The CSI-RS resources configured for a Rel-11 UE can always be configured as CSI-RS resources for a Rel-10 UE served by the same cell.
- At least the NZP CSI-RS resources configured for a Rel-11 UE can always be configured as CSI-RS resources for a Rel-10 UE served by the same cell.
- The CSI-RS resources configured for a Rel-11 UE can not necessarily be configured as CSI-RS resources for a Rel-10 UE served by the same cell (since different options are being considered for backwards compatibility between Rel-11 and Rel10).

In general, unless otherwise indicated, the embodiments described below are based on LTE, where the network operates using FDD and comprises one or more eNBs, each controlling one or more downlink cells, each downlink cell having a corresponding uplink cell. Each DL cell may serve one or more terminals (UEs) which may receive and decode signals transmitted in that serving cell. Referring again to Figure 6, the "serving cell" of UE 10 in Group 4 may be constituted by a single TP such as TP12. The other TPs in Group 4 may each be forming their own cell, with CoMP occurring across the cells in the group (the same applies of course to Groups 1, 2 and 3). There is no particular relationship between eNBs and cells/TPs. One eNB may control a whole group in Figure 6, or only part of a group, or all of the groups.

In order to control the use of transmission resources in time, frequency and spatial domains for transmission to and from the UEs, the eNB sends control channel messages (PDCCH) to the UEs. A PDCCH message typically indicates whether the data transmission will be in the uplink (using PUSCH) or downlink (using PDSCH), it also indicates the transmission resources, and other information such as transmission mode, number of antenna ports, data rate, and number of codewords enabled. In addition, PDCCH may indicate which reference signals (such as CRS) may be used to derive phase reference(s) for demodulation of a DL transmission. As already mentioned, antenna ports are defined by reference signals. Reference signals for different antenna ports, but occupying the same locations, are distinguished by different spreading codes.

Antenna ports may be formed by transmissions from the available transmission points. One or more antenna ports may form a cell. The cells in a CoMP group, such as any one of Groups 1 - Group 4 in Figure 6, may co-operate in the transmission of signals (such as PDSCH) to a UE. One or more cells in the CoMP group may become serving cells for a given UE.

In order for the eNB (or group of eNBs) to schedule efficient transmissions to UEs with appropriate transmission parameters and resources, each UE provides feedback on the DL channel state for one cell, or a group of serving cells to the eNB(s) controlling the serving cell(s) for that UE.

A CSI-RS pattern (for any purpose) is associated with (i) a resource pattern of REs which it occupies; and (ii) a subframe configuration indicating which subframes the occupied REs will occur in. Different patterns may have independent subframe configurations in general. A CSI-RS pattern may be transmitted by one or more TPs in a cell, and from more than one cell, but in the following embodiments it is assumed that the configuration of CSI-RS patterns from the UE perspective is in relation to the serving cell. Usually it would be assumed that each of the one or more TPs In the cell transmits the whole pattern, but in principle multiple TPs could be configured to collectively transmit the pattern.

Figure 7 outlines the method in embodiments of the present invention.

First (step 102), the base station (eNB) configures the terminal (UE). The configuration will normally include two types of information, namely, both the resource pattern (CSI-RS in the embodiments), and an identification of the behaviour to be performed by the terminal. However, as explained below it is possible for one such type of information to imply the other. The behaviour will typically specify the type of measurement which the terminal is expected to conduct upon the signals received in the resource pattern, and may also specify one or more different kinds of report based on the measurements. Step 102 could in particular be performed once, after the terminal has joined the network, but more likely the configuration would be repeated as often as desired in view of changes in the network structure.

Next, (step 104) the terminal receives the signals (CSI-RS) in accordance with the resource pattern notified in step 102, and performs at least one measurement on the signals. For present purposes it is unimportant how the signals are transmitted, but as mentioned above embodiments of the present invention are of particular application to a CoMP scenario, in which the terminal is served by a CoMP group of multiple transmission points under control of the base station. Various types of measurement (that is, measurements for different purposes) are possible as described below.

Then (step 106) the terminal sends one or more reports based on the measurements, as feedback to the eNB. This may involve reports not necessarily based directly on the signals in the resource patterns but can include, for example, reports on interference due to transmission points outside the CoMP group. As the resource pattern will normally be repeated in every time period of several subframes or frames, the terminal then returns to step 104 to perform measurement in the next time period.

Some particular embodiments of the present invention will now be described.

### First Embodiment - UE measurement behaviour indication

In this first embodiment, a UE receiving at least one CSI-RS pattern further receives information, for example an enumerated list, indicating the behaviour of the UE with respect to each pattern it is configured with. Such behaviours could include:
(a) The pattern contains NZP CSI-RS and the UE is expected to measure the channel from that TP for CQI purposes (under the assumption that transmission from the TP would be part of a coordinated CoMP transmission to the UE).
(b) The pattern contains NZP CSI-RS so the UE is expected to estimate interference from that TP for CQI purposes (under the assumption that transmission from the TP would be interference, and not part of a coordinated CoMP transmission to the UE).
(c) The pattern contains NZP CSI-RS for other UEs, so this UE is not expected to measure the indicated resources.
(d) The pattern is ZP CSI-RS for measurement of out-of-group interference by the UE.
(e) The pattern is ZP CSI-RS to allow measurement by other UEs of CSI-RS from coordinating cells, so this UE is not expected to measure the indicated resources.
(f) The pattern contains NZP CSI-RS and the UE is expected to make RRM-type measurements on CSI-RS. This would be for managing the set of CSI-RS resources for which the UE reports CSI.

In a variation, a particular pattern can be associated with more than one UE behaviour concurrently, for example behaviour (a) could be combined with behaviour (f). That is, the UE could construct more than one report based on the same CSI-RS. The measurement could be a channel measurement (for NZP CSI-RS) or an interference measurement (for ZP CSI-RS). Different CSI reports could be based on the same channel (or interference) measurement, based on different assumptions about the interference/channel.

In a further variation, the use of conventional NZP and ZP CSI-RS patterns (that is, without any indication of behaviour) can be mixed with behaviour-indication enhanced CSI-RS patterns. In this variation, if a UE receives a configuration without any behaviour indication, the UE can assume that it should follow the procedure set in Rel-10 of the LTE specifications.

A given behaviour indication may apply to a particular one of the following or a particular combination (or combinations) of:-
- CSI reference signal configuration
- CSI reference signal subframe configuration
- Reference-signal sequence

It should be noted that in LTE Rel-11 it is expected to be possible to configure a reference-signal sequence based on a different cell-ID than the ID of the serving cell.

### Second Embodiment - Implicit configuration via measurement behaviour

In a second embodiment, when signalling for behaviour (f), the enumeration chosen further identifies a measurement configuration (as already mentioned, this may include carrier frequency, cell identities and timing information), in terms of any relevant parameters including for example the trigger event and subsequent periodicity of the measurement. The link between the enumerations and the measurement configurations in this case could be available from specifications, or broadcast signalling in the cell.

### Third Embodiment - Partitioning of CSI-RS patterns

In a third embodiment, a list of sets of CSI-RS patterns is created such that the set to which a CSI-RS pattern is associated implies the UE's behaviour with respect to the pattern. A given pattern can be associated with any number of sets, implying any number of different behaviours, one per set. A given set can contain any number of different patterns.

Each set is associated with an identifier, and only the identifier needs to be signalled to UEs to indicate which partitioning is in use in the cell and thus which behaviour to follow. This could be signalled in broadcast system information (SIBs), or as part of CSI-RS configurations via RRC.

In a specific implementation of this embodiment, all possible CSI-RS patterns are partitioned in a pre-defined way, for example in the system specification, such that particular CSI-RS patterns are defined to have particular purpose (intended UE behaviour)s. Then, a configuration of multiple CSI-RS patterns has an implied purpose (intended UE behaviour) for each pattern, so as to achieve a similar effect as just described but without the need for signalling identifiers of sets. If instead, the partitioning is signalled then the partitioning can be different per cell, and possibly may change over time.

### Fourth Embodiment - Implied measurement resource patterns

A fourth embodiment is the reverse of the third, in that the indication of UE behaviour implies further which CSI-RS pattern(s) are to be used for measurement and reporting with the indicated behaviour. In other words, signalling a behaviour allows the UE to infer which CSI-RS pattern to expect, and there is no need for explicit signalling of actual resource patterns. As an example, each behaviour (a) - (f) referred to above could be identified by a numerical value such as 0 - 5 respectively.

### Fifth Embodiment - Triggered override of behaviour-indicated measurement patterns

In a fifth embodiment, a UE is configured with at least one resource pattern as described in the first embodiment. However, the network is able to override this pattern on a per-subframe and/or per-RB basis to request a specific different expected behaviour that the UE would not otherwise follow under the first embodiment. This can be done in a manner analogous to aperiodic CQI reporting in Rel-8, for example by setting a bit (to indicate an override in this subframe) or a bitmap (to indicate which RBs the override applies to in this subframe) in an uplink resource grant sent on PDCCH. Since the UE typically has to receive the whole subframe before acting on its contents, the bit or bitmap could contained in PDCCH for the subframe concerned; alternatively it could be contained in PDCCH of a preceding subframe.

This allows a particular UE to have its CSI-RS pattern-based measurement configuration altered briefly without having to signal at RRC (i) the original pattern; then (ii) a highly temporary new pattern; and then (iii) the original pattern again.

A particular example of this would be for behaviour (c) in the first embodiment. In this case, the network is able to signal to the UE that it wants a measurement to take place in some particular subframe(s) in resources where they would not otherwise occur, without entirely replacing the resource pattern-based measurement configuration the UE currently has.

### Sixth Embodiment - Semi-static override of non-measurement resource patterns

The sixth embodiment is like the fifth, except that a UE is configured with both the resource pattern of the first embodiment and a further pattern which signals semi-statically some time or frequency locations in which the pattern should be ignored by the UE, or in which the UE should periodically have some other measurement behaviour.

This is particularly relevant to behaviour (c) from the first embodiment, where for example it allows a common configuration among all UEs in one CoMP group as to which resources are not suitable/necessary for measurement and then a refined behavioural configuration for individual UEs for which the network wishes to obtain more CSI. In such an arrangement, the common pattern could be signalled by broadcast within the CoMP group, thus reducing RRC signalling; followed by the semi-static override being signalled per UE.

### Seventh Embodiment - Semi-autonomous non-measurement resource patterns

As already mentioned, a consideration in the present invention is to avoid over-burdening UEs with measurement reports. However, it may be that a UE decides that it has spare capacity available to provide additional reports over and above those required of it, which could offer the network additional useful information.

In a seventh embodiment, a UE operating in accordance with any of the preceding embodiments, and particularly for UE behaviour (c) of the first embodiment, is given the choice of whether or not to measure and report CQI based on the non-measurement resource patterns. The ability to make this choice can be granted/revoked either by signalling from the network, or as a matter of specification. A UE with sufficient spare measurement and calculation ability is then able to provide more, or more detailed, CQI to the network if it wishes. If the ability to choose is signalled by the network this may be done:
- By broadcast to all capable UEs in the cell (or CoMP group);
- At RRC on a semi-static per-UE basis; or
- At the physical layer, e.g. by asserting a bit on a DL channel such as PDCCH to indicate the ability to choose on a per-UE per-subframe basis.

### Eighth Embodiment - UE-indicated semi-autonomous non-measurement resource patterns

An eighth embodiment is like the seventh, but a UE with permission to choose to *ignore the non-measurement resource patterns for behaviour (c) [that means to send a report with respect to a pattern it is expected to ignore, does it not?]* may, in variations, either signal to the network whether it has so ignored a pattern *(i.e. sent a measurement report?),* or not signal whether it has. Signalling the fact would give the network knowledge of some of the assumptions the UE has made in arriving at its CQI report, whilst not signalling it would reduce the signalling load on the UL. Options for signalling mechanisms include:
- Asserting a bit or bitmap on a suitable UL physical channel such as PUCCH to indicate that the non-measurement pattern has been ignored in the subframe or in particular RBs of the subframe, respectively.
- By similar signalling at RRC if, for example, the UE intends to ignore the non-measurement pattern semi-statically.

In a variation, it is not necessary for the UE to receive any indication from the network of permission to engage in this behaviour (as per the seventh embodiment), and only the UL signalling from the UE, when present, publicises that this embodiment is in operation. Thus, assuming that the network has received the CQI (or other) report from the UE, a UE indication of how it has behaved may provide the network with more detailed information about how the UE has arrived at its report.

In a further variation, the network signals, in its grant of permission to engage in this embodiment, whether or not it wants the UE to provide the signalling described in this embodiment.

### Ninth Embodiment - UE-reauested semi-autonomous non-measurement resource patterns

A ninth embodiment is like the seventh and eighth embodiments, except that the UE makes a specific indication to the network that it would like to be given permission to engage in the behaviour of those embodiments, for behaviour (c). If the network considers such suitable, it then signals the grant of the permission as described in the seventh embodiment; otherwise it signals that permission is denied, or alternatively makes no response at all.

In an extension of this embodiment, the UE's request signalling includes an indication of what override of the non-measurement pattern(s) it proposes to make, in the time and/or frequency domains as well as possibly duration, to aid the network's decision as to the suitability of the request.

It is noted that the 5th - 9th embodiments may have an additional aspect of a further configuration which varies the measurement behaviour of the original configuration, without overriding it, and this further configuration may reside in the UE autonomously, or be signalled by the network.

### Tenth Embodiment - Implicitly configured RRM measurements

In a tenth embodiment the UE is configured with a set of CSI-RS patterns which all have the same subframe configuration, but which differ in the resource element configurations they have.

The UE makes RRM-type measurements, (i.e. measurements of the signal strength or received power) of the CSI-RS for each of the CSI-RS configurations. The indication of UE behaviour (implied via the enumerated list of the first embodiment) instructs the UE on what basis RRM-type measurements are to be reported to the base station, according to defined criteria.

Bearing in mind that multiple cells in a CoMP set may each be transmitting CSI-RS, and that a cell may comprise a plurality of TPs, such criteria could include:-
- Reporting of the CSI-RS with highest power
- Reporting of the N CSI-RS with highest power (where N is an integer and could be around 3 or 4, but without particular restriction)
- Triggering a report when the set of N CSI-RS with highest power changes
- Triggering a report when the received power of the CSI-RS with highest power changes by more than a threshold (e.g. in dB)
- Triggering a report when the received power of any of the N CSI-RS with highest power changes by more than a threshold (e.g. in dB)

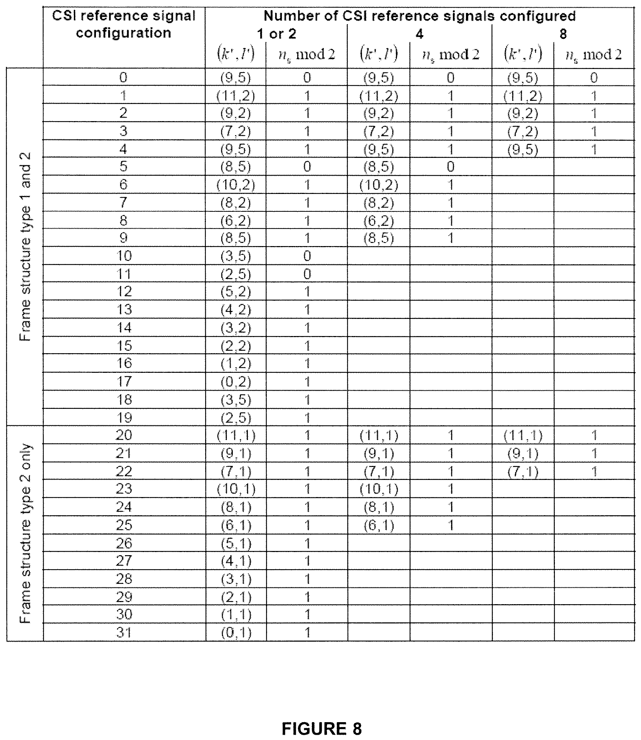

In particular, the set of CSI-RS configurations could include all those shown in Figure 8, taken from Table 6.10.5.2-1 of 3GPP TS36.211, in which case there may implicitly be some excluded configurations such as those corresponding to ZP CSI-RS, or explicitly configured NZP CSI-RS.

In an extension of this embodiment, a UE is configured with more than one set of CSI-RS patterns, each set having its own subframe configuration (which in general can be different or the same). For each set, a measurement and reporting behaviour as described above is indicated.

### Eleventh Embodiment - Independent subframe configurations for different types of measurements

In this eleventh embodiment the UE is configured with two CSI reference signal subframe configurations, which are each associated with the following parameters (which may be the same or different for each subframe configuration):
- Number of CSI reference signals
- CSI reference signal configuration (which as above means the REs reserved for the signals)
- Reference-signal sequence (e.g., scrambling sequence needed for decoding)

One subframe configuration is associated only with NZP CSI-RS patterns (which are configured for one or more of the possible related behaviours), and the other is associated only with ZP CSI-RS patterns (which are configured for one or more of the possible related behaviours).

This would allow a legacy UE to be configured with NZP or ZP CSI-RS patterns corresponding to the NZP CSI-RS patterns actually transmitted, and the possibility that no ZP CSI-RS patterns can be configured to correspond to the transmitted ZP CSI-RS patterns. However, for a legacy UE, the effect of puncturing PDSCH by unknown ZP CSI-RS is likely to be less severe than for unknown NZP CSI-RS.

Various modifications are possible within the scope of the invention.

The invention is described with reference to LTE, but it may also be applicable to other communication systems such as UMTS. The invention applies equally to FDD and TDD systems. Embodiments may be combined as appropriate, particularly in the case of the sixth, seventh and eighth embodiments.

Embodiments refer to CSI-RS patterns, but the invention is applicable to any other pattern of resource elements in time, frequency or space that might be defined, including existing downlink reference signals already defined in LTE, or which may be specified in future.

More generally, embodiments of the present invention are not confined to downlink reference signals but could in principle be applied to any pattern of resource elements for any reason.

UEs may be configured in various ways. The configurations for UEs behaving in accordance with relevant embodiments can be transmitted per-UE by RRC signalling, in broadcast via the MIB or SIBs, or could be defined in specifications and thereby built into firmware of the UEs..

In summary, embodiments of the present invention provide a wireless communication system comprising a base station and a terminal (10), with the terminal communicating with the base station via a plurality of transmission points (12) in a cooperative multipoint (CoMP) transmission scheme. The base station is arranged to provide the terminal with a configuration which comprises a resource pattern defined by a plurality of different sets of time and/or frequency locations, and the resource pattern is associated with a behaviour of the terminal with respect to the signals contained in the pattern. The behaviour includes which of a plurality of different types of measurement the terminal is expected to make when receiving the signal in each of the plurality of different sets of time and/or frequency locations, the type of report, if any, which the terminal is expected to provide to the said base station on the basis of the measurements. The terminal is arranged to receive the configuration and responsive thereto, when receiving the signal, to follow the behaviour with respect to the signal.

When applied to CSI-RS of an LTE system for example, invention embodiments provide new flexibility in the use of CSI-RS resource patterns so that they can be used for new purposes more efficiently than is currently the case, by associating a UE measurement behaviour identifier, such as "for measurement of non-zero-power CSI-RS", "not for measurement" or "for RRM measurements on CSI-RS resources" with each CSI-RS pattern and subframe configuration. Embodiments provide for the network to make temporary, UE-specific exceptions to a configuration and for various ways of assigning the measurement behaviours to patterns. Further, it allows some semi-autonomous UE decisions as to capability in certain cases.

### Industrial Applicability

In the CoMP scenarios envisaged in Rel-11 and onwards of LTE-A, there is the likelihood that a particular transmission point (TP) will be part of several distinct CoMP groups for distinct UEs and will therefore need to provide potentially large numbers of non-zero power CSI-RS patterns, as well as patterns for other purposes such as zero-power patterns and RRM measurement patterns. This invention allows much more flexible use of the currently-defined CSI-RS patterns and ensures they need not puncture PDSCH for the UE. In allowing such flexibility, it can be used to allow the network to manage the measurement load at the UE, and the feedback load on the UL. It further allows in some embodiments for agreement between the network and UE as to what suitable configurations might be.

## Claims

1. A method of managing measurement reports in a wireless communications system comprising at least one base station and a terminal, wherein the base station provides the terminal with a configuration which comprises a resource pattern defined by a plurality of different sets of time and frequency locations in which a signal may be transmitted, the resource pattern being from among a plurality of resource patterns each of which is associated with a behaviour of the terminal with respect to the signal, the behaviours associated with the resource patterns including:
which of one or more different types of measurement the terminal is expected to make when receiving signals in one or more of the different sets of time and frequency locations; and/or
one or more different types of report the terminal is expected to provide to the said base station on the basis of the measurements,
wherein the base station controls a plurality of transmission points forming one or more groups for coordinated multipoint, each transmission point being a member of at least one of the coordinated multipoint groups, the terminal being served by one of the groups, and
wherein the resource pattern provided by the base station to the terminal instructs the terminal to make one or more measurements and/or to send one or more reports,
wherein the wireless communication system is based on LTE and the signal includes a channel state information reference signal, CSI-RS transmitted from each of one or more transmission points in the form of a non-zero power, NZP, CSI-RS and/or a zero-power, ZP, CSI-RS, and
wherein the configuration further identifies or implies the signal to be an NZP and/or ZP CSI-RS and the behaviour of the terminal with respect to the signal includes any of:
using a NZP CSI-RS to measure the channel from the transmission point for CQI purposes when the transmission point is participating in CoMP transmission to the terminal;
using a NZP CSI-RS to estimate interference from the transmission point for CQI purposes when the transmission point is not participating in CoMP transmission to the terminal;
ignoring a NZP CSI-RS intended for other terminals;
using a ZP CSI-RS to measure interference from other transmission points outside the group serving the terminal;
ignoring a ZP CSI-RS intended for other terminals; and
using a NZP CSI-RS to measure a quantity used in radio resource management.

2. The method according to claim 1 applied to a frame-based wireless communication system in which each frame is divided into subframes, and wherein the set or sets of time and frequency locations each comprise:
a set of resource elements occupied by the signal, and
a subframe configuration indicating in which of one or more subframes the occupied resource elements occur.

3. The method according to claim 1 or 2 wherein the configuration further comprises a sequence needed to decode the signal.

4. The method according to claim 1 wherein the configuration also implies a reporting configuration defining how and when the terminal should provide said one or more different types of report.

5. The method according to any preceding claim further comprising defining sets of resource patterns such that the set, to which a given resource pattern belongs, implies the behaviour associated with the resource pattern or vice-versa.

6. The method according to any preceding claim further comprising the base station transmitting a signal to the terminal for temporarily over-riding the behaviour associated with the resource pattern.

7. The method according to any preceding claim wherein the different types of measurement have different priorities and the terminal is expected to make and/or report the highest priority measurement and/or report that applies to a time and frequency location.

8. The method according to claim 2 wherein the sets of time and frequency locations each comprise the same subframe configuration but respective different sets of resource elements, the behaviour of the terminal with respect to the signals including performing measurements of signal strength or received power on the signal.

9. The method according to claim 2 wherein:
the sets of time and frequency locations include a first subframe configuration for NZP CSI-RS with a first number of signals, a first set of resource elements and a first sequence, and a second subframe configuration for a ZP CSI-RS with a second number of signals, a second set of resource elements and a second sequence;
each of the configurations associated with one or more of said behaviours.

10. A wireless communication system comprising a base station and a terminal;
the base station arranged to provide the terminal with a configuration which comprises a resource pattern defined by a plurality of different sets of time and frequency locations in which a signal may be transmitted, the resource pattern being from among a plurality of resource patterns each of which is associated with a behaviour of the terminal with respect to the signal, the behaviour including:
which of one or more different types of measurement the terminal is expected to make when receiving signals in one or more of the different sets of time and frequency locations; and/or
one or more different types of report the terminal is expected to provide to the said base station on the basis of the measurements; and
the terminal arranged to receive the configuration and responsive thereto, when receiving the signal, to follow said behaviour with respect to the signal,
wherein the base station is configured to control a plurality of transmission points forming one or more groups for coordinated multipoint, each transmission point being a member of at least one of the coordinated multipoint groups, the terminal being served by one of the groups, and
wherein the resource pattern provided by the base station to the terminal instructs the terminal to make one or more measurements and/or to send one or more reports,
wherein the wireless communication system is based on LTE and the signal includes a channel state information reference signal, CSI-RS transmitted from each of one or more transmission points in the form of a non-zero power, NZP, CSI-RS and/or a zero-power, ZP, CSI-RS, and
wherein the configuration further identifies or implies the signal to be an NZP and/or ZP CSI-RS and the behaviour of the terminal with respect to the signal includes any of:
using a NZP CSI-RS to measure the channel from the transmission point for CQI purposes when the transmission point is participating in CoMP transmission to the terminal;
using a NZP CSI-RS to estimate interference from the transmission point for CQI purposes when the transmission point is not participating in CoMP transmission to the terminal;
ignoring a NZP CSI-RS intended for other terminals;
using a ZP CSI-RS to measure interference from other transmission points outside the group serving the terminal;
ignoring a ZP CSI-RS intended for other terminals; and
using a NZP CSI-RS to measure a quantity used in radio resource management.

11. A base station for use in a wireless communication system comprising:
configuration means arranged to provide a terminal of the wireless communication system with a configuration which comprises a resource pattern defined by a plurality of different sets of time and frequency locations in which a signal may be transmitted, the resource pattern being from among a plurality of resource patterns each of which is associated with a behaviour of the terminal with respect to the signal, the behaviour including:
which of one or more different types of measurement the terminal is expected to make when receiving signals in one or more of the different sets of time and frequency locations; and/or
one or more different types of report the terminal is expected to provide to the said base station on the basis of the measurements
wherein the base station is configured to control a plurality of transmission points forming one or more groups for coordinated multipoint, each transmission point being a member of at least one of the coordinated multipoint groups, the terminal being served by one of the groups, and
wherein the resource pattern provided by the base station to the terminal instructs the terminal to make one or more measurements and/or to send one or more reports,
wherein the wireless communication system is based on LTE and the signal includes a channel state information reference signal, CSI-RS transmitted from each of one or more transmission points in the form of a non-zero power, NZP, CSI-RS and/or a zero-power, ZP, CSI-RS, and
wherein the configuration further identifies or implies the signal to be an NZP and/or ZP CSI-RS and the behaviour of the terminal with respect to the signal includes any of:
using a NZP CSI-RS to measure the channel from the transmission point for CQI purposes when the transmission point is participating in CoMP transmission to the terminal;
using a NZP CSI-RS to estimate interference from the transmission point for CQI purposes when the transmission point is not participating in CoMP transmission to the terminal;
ignoring a NZP CSI-RS intended for other terminals;
using a ZP CSI-RS to measure interference from other transmission points outside the group serving the terminal;
ignoring a ZP CSI-RS intended for other terminals; and
using a NZP CSI-RS to measure a quantity used in radio resource management.

12. A terminal for use in a wireless communication system comprising:
measurement means arranged to receive a configuration which comprises a resource pattern defined by a plurality of different sets of time and frequency locations in which a signal may be transmitted, the resource pattern being from among a plurality of resource patterns each of which is associated with a behaviour of the terminal with respect to the signal, the behaviour including:
which of one or more different types of measurement the terminal is expected to make when receiving signals in one or more of the different sets of time and frequency locations; and
one or more different types of report the terminal is expected to provide to the said base station on the basis of the measurements,
wherein the terminal is served by one of one or more groups formed from a plurality of transmission points for coordinated multipoint, each transmission point being a member of at least one of the coordinated multipoint groups that are controlled by a base station, and
wherein the resource pattern provided by the base station to the terminal instructs the terminal to make one or more measurements and/or to send one or more reports,
wherein the wireless communication system is based on LTE and the signal includes a channel state information reference signal, CSI-RS transmitted from each of one or more transmission points in the form of a non-zero power, NZP, CSI-RS and/or a zero-power, ZP, CSI-RS, and
wherein the configuration further identifies or implies the signal to be an NZP and/or ZP CSI-RS and the behaviour of the terminal with respect to the signal includes any of:
using a NZP CSI-RS to measure the channel from the transmission point for CQI purposes when the transmission point is participating in CoMP transmission to the terminal;
using a NZP CSI-RS to estimate interference from the transmission point for CQI purposes when the transmission point is not participating in CoMP transmission to the terminal;
ignoring a NZP CSI-RS intended for other terminals;
using a ZP CSI-RS to measure interference from other transmission points outside the group serving the terminal;
ignoring a ZP CSI-RS intended for other terminals; and
using a NZP CSI-RS to measure a quantity used in radio resource management.

## Patentansprüche

1. Verfahren zum Verwalten von Messberichten in einem Drahtloskommunikationssystem, umfassend wenigstens eine Basisstation und ein Endgerät, wobei die Basisstation dem Endgerät eine Konfiguration bereitstellt, die ein Ressourcenmuster umfasst, das durch mehrere unterschiedliche Sätze von Zeit- und Frequenzbereichen definiert ist, in denen ein Signal übertragen werden kann, wobei das Ressourcenmuster eines aus mehreren Ressourcenmustern ist, von denen jedes einem Verhalten des Endgeräts in Bezug auf das Signal zugeordnet ist, wobei die den Ressourcenmustern zugeordneten Verhalten beinhalten:
welchen von einem oder mehreren unterschiedlichen Typen von Messungen das Endgerät erwartungsgemäß durchführen soll, wenn es Signale in einem oder mehreren der unterschiedlichen Sätze von Zeit- und Frequenzbereichen empfängt; und/oder einen oder mehrere unterschiedliche Typen von Berichten, die das Endgerät erwartungsgemäß der Basisstation auf Basis der Messungen bereitstellen soll,
wobei die Basisstation mehrere Übertragungspunkte steuert, die eine oder mehrere Gruppen für einen koordinierten Multipunkt bilden, wobei jeder Übertragungspunkt ein Mitglied von wenigstens einer der koordinierten Multipunktgruppen ist, wobei das Endgerät von einer der Gruppen bedient wird, und
wobei das Ressourcenmuster, das durch die Basisstation dem Endgerät bereitgestellt wird, das Endgerät anweist, eine oder mehrere Messungen durchzuführen und/oder einen oder mehrere Berichte zu senden,
wobei das Drahtloskommunikationssystem auf LTE basiert und das Signal ein Kanalstatusinformations-Referenzsignal, CSI-RS, beinhaltet, das von jedem von einem oder mehreren Übertragungspunkten in Form eines Nichtnullleistungs-NZP-CSI-RS und/oder eines Nullleistungs-ZP-CSI-RS übertragen wird, und
wobei die Konfiguration ferner identifiziert oder impliziert, dass das Signal ein NZP- und/oder ZP-CSI-RS ist und das Verhalten des Endgeräts in Bezug auf das Signal eines von Folgendem beinhaltet:
Verwenden eines NZP-CSI-RS zum Messen des Kanals vom Übertragungspunkt für CQI-Zwecke, wenn der Übertragungspunkt an einer CoMP-Übertragung an das Endgerät teilnimmt;
Verwenden eines NZP-CSI-RS zum Schätzen der Interferenz vom Übertragungspunkt für CQI-Zwecke, wenn der Übertragungspunkt nicht an einer CoMP-Übertragung an das Endgerät teilnimmt;
Ignorieren eines NZP-CSI-RS, das für andere Endgeräte bestimmt ist;
Verwenden eines ZP-CSI-RS zum Messen der Interferenz von anderen Übertragungspunkten außerhalb der Gruppe, die das Endgerät bedient;
Ignorieren eines ZP-CSI-RS, das für andere Endgeräte bestimmt ist; und
Verwenden eines NZP-CSI-RS zum Messen einer Größe, die bei der Funkressourcenverwaltung verwendet wird.

2. Verfahren nach Anspruch 1, angewendet auf ein rahmenbasiertes Drahtloskommunikationssystem, in dem jeder Rahmen in Subrahmen unterteilt ist, und wobei der Satz oder die Sätze von Zeit- und Frequenzbereichen jeweils umfassen:
einen Satz von Ressourcenelementen, die durch das Signal besetzt sind, und
eine Subrahmen-Konfiguration, die angibt, in welchem von einem oder mehreren Subrahmen die besetzten Ressourcenelemente vorkommen.

3. Verfahren nach Anspruch 1 oder 2, wobei die Konfiguration ferner eine Sequenz beinhaltet, die zum Decodieren des Signals benötigt werden.

4. Verfahren nach Anspruch 1, wobei die Konfiguration auch eine Berichtskonfiguration impliziert, die definiert, wie und wann das Endgerät den einen oder die mehreren unterschiedlichen Typen von Berichten bereitstellen soll.

5. Verfahren nach einem der vorhergehenden Ansprüche, ferner umfassend das Definieren von Sätzen von Ressourcenmustern, so dass der Satz, zu dem ein gegebenes Ressourcenmuster gehört, das dem Ressourcenmuster zugeordnete Verhalten impliziert oder umgekehrt.

6. Verfahren nach einem der vorhergehenden Ansprüche, ferner umfassend die Basisstation, die ein Signal an das Endgerät überträgt, um das dem Ressourcenmuster zugeordnete Verhalten vorübergehend auszuschalten.

7. Verfahren nach einem der vorhergehenden Ansprüche, wobei die unterschiedlichen Typen von Messungen unterschiedliche Prioritäten haben und von dem Endgerät erwartet wird, die Messung und/oder den Bericht mit der höchsten Priorität durchzuführen und/oder zu berichten, der für einen Zeit- und Frequenzbereich gilt.

8. Verfahren nach Anspruch 2, wobei die Sätze von Zeit- und Frequenzbereichen jeweils die gleiche Subrahmen-Konfiguration, aber jeweils unterschiedliche Sätze von Ressourcenelementen umfassen, wobei das Verhalten des Endgeräts in Bezug auf die Signale das Ausführen von Messungen der Signalstärke oder Empfangsleistung des Signals beinhaltet.

9. Verfahren nach Anspruch 2 wobei:
die Sätze von Zeit- und Frequenzbereichen eine erste Subrahmen-Konfiguration für NZP-CSI-RS mit einer ersten Anzahl von Signalen, einem ersten Satz von Ressourcenelementen und einer ersten Sequenz und eine zweite Subrahmen-Konfiguration für ein ZP-CSI-RS mit einer zweiten Anzahl von Signalen, einem zweiten Satz von Ressourcenelementen und einer zweiten Sequenz beinhalten;
wobei jede der Konfigurationen einem oder mehreren der Verhalten zugeordnet ist.

10. Drahtloskommunikationssystem, umfassend eine Basisstation und ein Endgerät;
wobei die Basisstation angeordnet ist, um dem Endgerät eine Konfiguration bereitzustellen, die ein Ressourcenmuster umfasst, das durch mehrere unterschiedliche Sätze von Zeit- und
Frequenzbereichen definiert ist, in denen ein Signal übertragen werden kann, wobei das Ressourcenmuster eines aus mehreren Ressourcenmustern ist, von denen jedes einem Verhalten des Endgeräts in Bezug auf das Signal zugeordnet ist, wobei das Verhalten beinhaltet:
welchen von einem oder mehreren unterschiedlichen Typen von Messungen das Endgerät erwartungsgemäß durchführen soll, wenn es Signale in einem oder mehreren der unterschiedlichen Sätze von Zeit- und Frequenzbereichen empfängt; und/oder einen oder mehrere unterschiedliche Typen von Berichten, die das Endgerät erwartungsgemäß der Basisstation auf Basis der Messungen bereitstellen soll; und
wobei das Endgerät angeordnet ist, um die Konfiguration zu empfangen und in Reaktion darauf, wenn es das Signal empfängt, das Verhalten in Bezug auf das Signal zu befolgen,
wobei die Basisstation dafür ausgelegt ist, mehrere Übertragungspunkte zu steuern, die eine oder mehrere Gruppen für einen koordinierten Multipunkt bilden, wobei jeder Übertragungspunkt ein Mitglied von wenigstens einer der koordinierten Multipunktgruppen ist, wobei das Endgerät von einer der Gruppen bedient wird, und
wobei das Ressourcenmuster, das durch die Basisstation dem Endgerät bereitgestellt wird, das Endgerät anweist, eine oder mehrere Messungen durchzuführen und/oder einen oder mehrere Berichte zu senden,
wobei das Drahtloskommunikationssystem auf LTE basiert und das Signal ein Kanalstatusinformations-Referenzsignal, CSI-RS, beinhaltet, das von jedem von einem oder mehreren Übertragungspunkten in Form eines Nichtnullleistungs-NZP-CSI-RS und/oder eines Nullleistungs-ZP-CSI-RS übertragen wird, und
wobei die Konfiguration ferner identifiziert oder impliziert, dass das Signal ein NZP- und/oder ZP-CSI-RS ist und das Verhalten des Endgeräts in Bezug auf das Signal eines von Folgendem beinhaltet:
Verwenden eines NZP-CSI-RS zum Messen des Kanals vom Übertragungspunkt für CQI-Zwecke, wenn der Übertragungspunkt an einer CoMP-Übertragung an das Endgerät teilnimmt; Verwenden eines NZP-CSI-RS zum Schätzen der Interferenz vom Übertragungspunkt für CQI-Zwecke, wenn der Übertragungspunkt nicht an einer CoMP-Übertragung an das Endgerät teilnimmt;
Ignorieren eines NZP-CSI-RS, das für andere Endgeräte bestimmt ist;
Verwenden eines ZP-CSI-RS zum Messen der Interferenz von anderen Übertragungspunkten außerhalb der Gruppe, die das Endgerät bedient;
Ignorieren eines ZP-CSI-RS, das für andere Endgeräte bestimmt ist; und
Verwenden eines NZP-CSI-RS zum Messen einer Größe, die bei der Funkressourcenverwaltung verwendet wird.

11. Basisstation zur Verwendung in einem Drahtloskommunikationssystem, umfassend:
Konfigurationsmittel, die angeordnet sind, um einem Endgerät des Drahtloskommunikationssystems eine Konfiguration bereitzustellen, die ein Ressourcenmuster umfasst, das durch mehrere unterschiedliche Sätze von Zeit- und Frequenzbereichen definiert ist, in denen ein Signal übertragen werden kann, wobei das Ressourcenmuster eines aus mehreren Ressourcenmustern ist, von denen jedes einem Verhalten des Endgeräts in Bezug auf das Signal zugeordnet ist, wobei das Verhalten beinhaltet:
welchen von einem oder mehreren unterschiedlichen Typen von Messungen das Endgerät erwartungsgemäß durchführen soll, wenn es Signale in einem oder mehreren der unterschiedlichen Sätze von Zeit- und Frequenzbereichen empfängt; und/oder einen oder mehrere unterschiedliche Typen von Berichten, die das Endgerät erwartungsgemäß der Basisstation auf Basis der Messungen bereitstellen soll,
wobei die Basisstation dafür ausgelegt ist, mehrere Übertragungspunkte zu steuern, die eine oder mehrere Gruppen für einen koordinierten Multipunkt bildet, wobei jeder Übertragungspunkt ein Mitglied von wenigstens einer der koordinierten Multipunktgruppen ist,
wobei das Endgerät von einer der Gruppen bedient wird, und
wobei das Ressourcenmuster, das durch die Basisstation dem Endgerät bereitgestellt wird, das Endgerät anweist, eine oder mehrere Messungen durchzuführen und/oder einen oder mehrere Berichte zu senden,
wobei das Drahtloskommunikationssystem auf LTE basiert und das Signal ein Kanalstatusinformations-Referenzsignal, CSI-RS, beinhaltet, das von jedem von einem oder mehreren Übertragungspunkten in Form eines Nichtnullleistungs-NZP-CSI-RS und/oder eines Nullleistungs-ZP-CSI-RS übertragen wird, und
wobei die Konfiguration ferner identifiziert oder impliziert, dass das Signal ein NZP- und/oder ZP-CSI-RS ist und das Verhalten des Endgeräts in Bezug auf das Signal eines von Folgendem beinhaltet:
Verwenden eines NZP-CSI-RS zum Messen des Kanals vom Übertragungspunkt für CQI-Zwecke, wenn der Übertragungspunkt an einer CoMP-Übertragung an das Endgerät teilnimmt;
Verwenden eines NZP-CSI-RS zum Schätzen der Interferenz vom Übertragungspunkt für CQI-Zwecke, wenn der Übertragungspunkt nicht an einer CoMP-Übertragung an das Endgerät teilnimmt;
Ignorieren eines NZP-CSI-RS, das für andere Endgeräte bestimmt ist;
Verwenden eines ZP-CSI-RS zum Messen der Interferenz von anderen Übertragungspunkten außerhalb der Gruppe, die das Endgerät bedient;
Ignorieren eines ZP-CSI-RS, das für andere Endgeräte bestimmt ist; und
Verwenden eines NZP-CSI-RS zum Messen einer Größe, die bei der Funkressourcenverwaltung verwendet wird.

12. Endgerät zur Verwendung in einem Drahtloskommunikationssystem, umfassend:
Messmittel, die angeordnet sind, um eine Konfiguration zu empfangen, die ein Ressourcenmuster umfasst, das durch mehrere unterschiedliche Sätze von Zeit- und
Frequenzbereichen definiert ist, in denen ein Signal übertragen werden kann, wobei das Ressourcenmuster eines aus mehreren Ressourcenmustern ist, von denen jedes einem Verhalten des Endgeräts in Bezug auf das Signal zugeordnet ist, wobei das Verhalten beinhaltet:
welchen von einem oder mehreren unterschiedlichen Typen von Messungen das Endgerät erwartungsgemäß durchführen soll, wenn es Signale in einem oder mehreren der unterschiedlichen Sätze von Zeit- und Frequenzbereichen empfängt; und/oder einen oder mehrere unterschiedliche Typen von Berichten, die das Endgerät erwartungsgemäß der Basisstation auf Basis der Messungen bereitstellen soll,
wobei das Endgerät durch eine oder mehrere Gruppen bedient wird, die aus mehreren Übertragungspunkten für einen koordinierten Multipunkt gebildet sind, wobei jeder Übertragungspunkt ein Mitglied von wenigstens einer der koordinierten Multipunktgruppen ist,
die durch eine Basisstation gesteuert werden, und
wobei das Ressourcenmuster, das durch die Basisstation dem Endgerät bereitgestellt wird, das Endgerät anweist, eine oder mehrere Messungen durchzuführen und/oder einen oder mehrere Berichte zu senden,
wobei das Drahtloskommunikationssystem auf LTE basiert und das Signal ein Kanalstatusinformations-Referenzsignal, CSI-RS, beinhaltet, das von jedem von einem oder mehreren Übertragungspunkten in Form eines Nichtnullleistungs-NZP-CSI-RS und/oder eines Nullleistungs-ZP-CSI-RS übertragen wird, und
wobei die Konfiguration ferner identifiziert oder impliziert, dass das Signal ein NZP- und/oder ZP-CSI-RS ist und das Verhalten des Endgeräts in Bezug auf das Signal eines von Folgendem beinhaltet:
Verwenden eines NZP-CSI-RS zum Messen des Kanals vom Übertragungspunkt für CQI-Zwecke, wenn der Übertragungspunkt an einer CoMP-Übertragung an das Endgerät teilnimmt;
Verwenden eines NZP-CSI-RS zum Schätzen der Interferenz vom Übertragungspunkt für CQI-Zwecke, wenn der Übertragungspunkt nicht an einer CoMP-Übertragung an das Endgerät teilnimmt;
Ignorieren eines NZP-CSI-RS, das für andere Endgeräte bestimmt ist;
Verwenden eines ZP-CSI-RS zum Messen der Interferenz von anderen Übertragungspunkten außerhalb der Gruppe, die das Endgerät bedient;
Ignorieren eines ZP-CSI-RS, das für andere Endgeräte bestimmt ist; und
Verwenden eines NZP-CSI-RS zum Messen einer Größe, die bei der Funkressourcenverwaltung verwendet wird.

## Revendications

1. Procédé de gestion de rapports de mesure dans un système de communication sans fil comprenant au moins une station de base et un terminal, dans lequel la station de base fournit, au terminal, une configuration qui comprend un modèle de ressources défini par une pluralité d'ensembles différents d'emplacements temporels et fréquentiels dans lesquels un signal peut être transmis, le modèle de ressources correspondant à un modèle parmi une pluralité de modèles de ressources dont chacun est associé à un comportement du terminal par rapport au signal, les comportements associés aux modèles de ressources incluant :
le type de mesure, parmi un ou plusieurs types de mesure différents, que le terminal est censé mettre en oeuvre lors de la réception de signaux dans un ou plusieurs des ensembles différents d'emplacements temporels et fréquentiels ; et/ou
un ou plusieurs types de rapport différents que le terminal est censé fournir à ladite station de base sur la base des mesures ;
dans lequel la station de base commande une pluralité de points de transmission formant un ou plusieurs groupes pour une transmission multipoint coordonnée, chaque point de transmission étant un membre d'au moins l'un des groupes de transmission multipoint coordonnée, le terminal étant desservi par l'un des groupes ; et
dans lequel le modèle de ressources fourni par la station de base au terminal donne instruction au terminal d'effectuer une ou plusieurs mesures et/ou d'envoyer un ou plusieurs rapports ;
dans lequel le système de communication sans fil est basé sur la technologie LTE, et le signal inclut un signal de référence d'informations d'état de canal, CSI-RS, transmis à partir de chacun d'un ou plusieurs points de transmission sous la forme d'un signal CSI-RS de puissance non nulle, NZP, et/ou d'un signal CSI-RS de puissance nulle, ZP ; et
dans lequel la configuration identifie en outre que, ou implique en outre que, le signal est un signal CSI-RS NZP et/ou un signal CSI-RS ZP, et dans lequel le comportement du terminal par rapport au signal inclut l'un quelconque des comportements ci-dessous consistant à :
utiliser un signal CSI-RS NZP pour mesurer le canal à partir du point de transmission à des fins d'indication CQI lorsque le point de transmission participe à la transmission CoMP au terminal ;
utiliser un signal CSI-RS NZP pour estimer un brouillage à partir du point de transmission à des fins d'indication CQI lorsque le point de transmission ne participe pas à la transmission CoMP au terminal ;
ignorer un signal CSI-RS NZP destiné à d'autres terminaux ;
utiliser un signal CSI-RS ZP pour mesurer un brouillage provenant d'autres points de transmission en dehors du groupe desservant le terminal ;
ignorer un signal CSI-RS ZP destiné à d'autres terminaux ; et
utiliser un signal CSI-RS NZP pour mesurer une quantité utilisée dans le cadre d'une gestion de ressources radio.

2. Procédé selon la revendication 1, appliqué à un système de communication sans fil à base de trames, dans lequel chaque trame est divisée en des sous-trames, et dans lequel le ou les ensembles d'emplacements temporels et fréquentiels comprennent chacun :
un ensemble d'éléments de ressources occupés par le signal ; et
une configuration de sous-trames indiquant dans laquelle d'une ou plusieurs sous-trames se situent les éléments de ressources occupés.

3. Procédé selon la revendication 1 ou 2, dans lequel la configuration comprend en outre une séquence nécessaire pour décoder le signal.

4. Procédé selon la revendication 1, dans lequel la configuration implique également une configuration de rapport définissant comment et quand le terminal doit fournir ledit un ou lesdits plusieurs types de rapport différents.

5. Procédé selon l'une quelconque des revendications précédentes, comprenant en outre l'étape consistant à définir des ensembles de modèles de ressources de sorte que l'ensemble, auquel appartient un modèle de ressources donné, implique le comportement associé au modèle de ressources, et inversement.

6. Procédé selon l'une quelconque des revendications précédentes, comprenant en outre l'étape dans laquelle la station de base transmet un signal au terminal pour écraser temporairement le comportement associé au modèle de ressources.

7. Procédé selon l'une quelconque des revendications précédentes, dans lequel les différents types de mesure présentent des priorités différentes, et le terminal est censé effectuer et/ou signaler la mesure et/ou le rapport ayant la priorité la plus élevée qui s'applique à un emplacement temporel et fréquentiel.

8. Procédé selon la revendication 2, dans lequel les ensembles d'emplacements temporels et fréquentiels comprennent chacun la même configuration de sous-trames, mais des ensembles respectifs différents d'éléments de ressources, le comportement du terminal par rapport aux signaux incluant la mise en oeuvre de mesures d'intensité de signal ou de puissance reçue sur le signal.

9. Procédé selon la revendication 2, dans lequel :
les ensembles d'emplacements temporels et fréquentiels inclut une première configuration de sous-trames pour un signal CSI-RS NZP avec un premier nombre de signaux, un premier ensemble d'éléments de ressources et une première séquence, et une seconde configuration de sous-trames pour un signal CSI-RS ZP avec un second nombre de signaux, un second ensemble d'éléments de ressources et une seconde séquence ; et
chacune des configurations est associée à un ou plusieurs desdits comportements.

10. Système de communication sans fil comprenant une station de base et un terminal :
dans lequel la station de base est agencée de manière à fournir, au terminal, une configuration qui comprend un modèle de ressources défini par une pluralité d'ensembles différents d'emplacements temporels et fréquentiels dans lesquels un signal peut être transmis, le modèle de ressources correspondant à un modèle parmi une pluralité de modèles de ressources dont chacun est associé à un comportement du terminal par rapport au signal, le comportement incluant :
le type de mesure, parmi un ou plusieurs types de mesure différents, que le terminal est censé mettre en oeuvre lors de la réception de signaux dans un ou plusieurs des ensembles différents d'emplacements temporels et fréquentiels ; et/ou
un ou plusieurs types de rapport différents que le terminal est censé fournir à ladite station de base sur la base des mesures ; et
dans lequel le terminal est agencé de manière à recevoir la configuration, et en réponse à celle-ci, lors de la réception du signal, à suivre ledit comportement par rapport au signal ;
dans lequel la station de base est configurée de manière à commander une pluralité de points de transmission formant un ou plusieurs groupes pour une transmission multipoint coordonnée, chaque point de transmission étant un membre d'au moins l'un des groupes de transmission multipoint coordonnée, le terminal étant desservi par l'un des groupes ; et
dans lequel le modèle de ressources fourni par la station de base au terminal donne instruction au terminal d'effectuer une ou plusieurs mesures et/ou d'envoyer un ou plusieurs rapports ;
dans lequel le système de communication sans fil est basé sur la technologie LTE, et le signal inclut un signal de référence d'informations d'état de canal, CSI-RS, transmis à partir de chacun d'un ou plusieurs points de transmission sous la forme d'un signal CSI-RS de puissance non nulle, NZP, et/ou d'un signal CSI-RS de puissance nulle, ZP ; et
dans lequel la configuration identifie en outre que, ou implique en outre que, le signal est un signal CSI-RS NZP et/ou un signal CSI-RS ZP, et dans lequel le comportement du terminal par rapport au signal inclut l'un quelconque des comportements ci-dessous consistant à :
utiliser un signal CSI-RS NZP pour mesurer le canal à partir du point de transmission à des fins d'indication CQI lorsque le point de transmission participe à la transmission CoMP au terminal ;
utiliser un signal CSI-RS NZP pour estimer un brouillage à partir du point de transmission à des fins d'indication CQI lorsque le point de transmission ne participe pas à la transmission CoMP au terminal ;
ignorer un signal CSI-RS NZP destiné à d'autres terminaux ;
utiliser un signal CSI-RS ZP pour mesurer un brouillage provenant d'autres points de transmission en dehors du groupe desservant le terminal ;
ignorer un signal CSI-RS ZP destiné à d'autres terminaux ; et
utiliser un signal CSI-RS NZP pour mesurer une quantité utilisée dans le cadre d'une gestion de ressources radio.

11. Station de base destinée à être utilisée dans un système de communication sans fil comprenant :
un moyen de configuration agencé de manière à fournir, à un terminal du système de communication sans fil, une configuration qui comprend un modèle de ressources défini par une pluralité d'ensembles différents d'emplacements temporels et fréquentiels dans lesquels un signal peut être transmis, le modèle de ressources correspondant à un modèle parmi une pluralité de modèles de ressources dont chacun est associé à un comportement du terminal par rapport au signal, le comportement incluant :
le type de mesure, parmi un ou plusieurs types de mesure différents, que le terminal est censé mettre en oeuvre lors de la réception de signaux dans un ou plusieurs des ensembles différents d'emplacements temporels et fréquentiels ; et/ou
un ou plusieurs types de rapport différents que le terminal est censé fournir à ladite station de base sur la base des mesures ; et
dans lequel la station de base est configurée de manière à commander une pluralité de points de transmission formant un ou plusieurs groupes pour une transmission multipoint coordonnée, chaque point de transmission étant un membre d'au moins l'un des groupes de transmission multipoint coordonnée, le terminal étant desservi par l'un des groupes ; et
dans lequel le modèle de ressources fourni par la station de base au terminal donne instruction au terminal d'effectuer une ou plusieurs mesures et/ou d'envoyer un ou plusieurs rapports ;
dans lequel le système de communication sans fil est basé sur la technologie LTE, et le signal inclut un signal de référence d'informations d'état de canal, CSI-RS, transmis à partir de chacun d'un ou plusieurs points de transmission sous la forme d'un signal CSI-RS de puissance non nulle, NZP, et/ou d'un signal CSI-RS de puissance nulle, ZP ; et
dans lequel la configuration identifie en outre que, ou implique en outre que, le signal est un signal CSI-RS NZP et/ou un signal CSI-RS ZP, et dans lequel le comportement du terminal par rapport au signal inclut l'un quelconque des comportements ci-dessous consistant à :
utiliser un signal CSI-RS NZP pour mesurer le canal à partir du point de transmission à des fins d'indication CQI lorsque le point de transmission participe à la transmission CoMP au terminal ;
utiliser un signal CSI-RS NZP pour estimer un brouillage à partir du point de transmission à des fins d'indication CQI lorsque le point de transmission ne participe pas à la transmission CoMP au terminal ;
ignorer un signal CSI-RS NZP destiné à d'autres terminaux ;
utiliser un signal CSI-RS ZP pour mesurer un brouillage provenant d'autres points de transmission en dehors du groupe desservant le terminal ;
ignorer un signal CSI-RS ZP destiné à d'autres terminaux ; et
utiliser un signal CSI-RS NZP pour mesurer une quantité utilisée dans le cadre d'une gestion de ressources radio.

12. Terminal destiné à être utilisé dans un système de communication sans fil comprenant :
un moyen de mesure agencé de manière à recevoir une configuration qui comprend un modèle de ressources défini par une pluralité d'ensembles différents d'emplacements temporels et fréquentiels dans lesquels un signal peut être transmis, le modèle de ressources correspondant à un modèle parmi une pluralité de modèles de ressources dont chacun est associé à un comportement du terminal par rapport au signal, le comportement incluant :
le type de mesure, parmi un ou plusieurs types de mesure différents, que le terminal est censé mettre en oeuvre lors de la réception de signaux dans un ou plusieurs des ensembles différents d'emplacements temporels et fréquentiels ; et/ou
un ou plusieurs types de rapport différents que le terminal est censé fournir à ladite station de base sur la base des mesures ;
dans lequel le terminal est desservi par l'un d'un ou plusieurs groupes formés à partir d'une pluralité de points de transmission pour une transmission multipoint coordonnée, chaque point de transmission étant un membre d'au moins l'un des groupes de transmission multipoint coordonnée qui sont commandés par une station de base ; et
dans lequel le modèle de ressources fourni par la station de base au terminal donne instruction au terminal d'effectuer une ou plusieurs mesures et/ou d'envoyer un ou plusieurs rapports ;
dans lequel le système de communication sans fil est basé sur la technologie LTE, et le signal inclut un signal de référence d'informations d'état de canal, CSI-RS, transmis à partir de chacun d'un ou plusieurs points de transmission sous la forme d'un signal CSI-RS de puissance non nulle, NZP, et/ou d'un signal CSI-RS de puissance nulle, ZP ; et
dans lequel la configuration identifie en outre que, ou implique en outre que, le signal est un signal CSI-RS NZP et/ou un signal CSI-RS ZP, et dans lequel le comportement du terminal par rapport au signal inclut l'un quelconque des comportements ci-dessous consistant à :
utiliser un signal CSI-RS NZP pour mesurer le canal à partir du point de transmission à des fins d'indication CQI lorsque le point de transmission participe à la transmission CoMP au terminal ;
utiliser un signal CSI-RS NZP pour estimer un brouillage à partir du point de transmission à des fins d'indication CQI lorsque le point de transmission ne participe pas à la transmission CoMP au terminal ;
ignorer un signal CSI-RS NZP destiné à d'autres terminaux ;
utiliser un signal CSI-RS ZP pour mesurer un brouillage provenant d'autres points de transmission en dehors du groupe desservant le terminal ;
ignorer un signal CSI-RS ZP destiné à d'autres terminaux ; et
utiliser un signal CSI-RS NZP pour mesurer une quantité utilisée dans le cadre d'une gestion de ressources radio.
